# EUROPEAN PATENT SPECIFICATION

(11) **EP 2 123 981 B1**
(45) Date of publication and mention of the grant of the patent: **03.11.2010**
(21) Application number: 08009494.9
(22) Date of filing: 23.05.2008
(51) Int. Cl.: F24C 15/32, A21B 3/04

(54) **Automatic cooking oven comprising steam generating system**
Automatik-Backofen mit Dampferzeugungssystem
Four de cuisson automatique comportant un système de génération de vapeur

(43) Date of publication of application: 25.11.2009
(73) Proprietor: Electrolux Home Products Corporation N.V., 1930 Zaventem (BE)
(72) Inventor: Ruther, Florian, 91541 Rothenburg o. d. Tauber (DE); Kaiser, Kersten, 91541 Rothenburg o.d. Tauber (DE)
(74) Representative: Hochmuth, Jürgen

(56) References cited:
- EP-A- 1 384 951
- EP-A- 1 719 417
- EP-A- 1 767 860
- WO-A-97/00596
- US-B1- 7 060 941

## Description

### TECHNICAL FIELD OF THE INVENTION

The present invention generally relates to an automatic cooking oven comprising a control system for automatically cooking food according to a plurality of cooking modes. The cooking oven also comprises a steam generating system for cooking food by steam only or in combination with conventional heating means.

### BACKGROUND OF THE INVENTION

The state of the art with regard to an automatic cooking oven comprising a steam generating system is illustrated on one hand by cooking ovens comprising a steam generator and, on the other hand, by automatically operating ovens of conventional dry cooking type.

Cooking food by steam is extremely versatile and has many advantages over other cooking methods. Such advantages include accelerating the cooking process, moisturizing the food during the cooking process and preserving flavor, vitamins, and nutrients. Furthermore, cooking with steam results in more homogeneously cooked food having an appearance that appeals to the senses. This has made electric steam cooking attractive not only for commercial but also for the domestic use.

Few domestic cooking oven models use steam as the sole source of heat, as a steam only oven cannot brown or crisp food as it cooks with moisture rather than with hot dry heat. Thus, the oven according to the invention is preferably a combination oven, which combines the functions of a steam oven and a conventional dry heat oven into a single unit. Such oven can be used to implement a method of cooking food by classic convection or fan-forced dry-heat, by steaming, or by a combination of both.

Recently, there is also a general trend towards domestic appliances, which offer improved customer convenience by means of intelligent reasoning applied to data derived from sensors within the appliance. An example of this trend is sensor based automated cooking, which is a process of cooking food, which assumes that very little knowledge of how to cook the food will be supplied by the user. In order to achieve this, cooking operation is controlled by a control system, which uses sensors in the cooking oven to determine optimum cooking conditions such as power levels and cooking times.

The optimum cooking conditions are dependent on food related parameters such as food category, weight of food, initial and final cooking temperature. The cooking conditions are also dependent on parameters of the cooking oven, such as heating power and steam rate. The large number of parameters and the ill-defined nature of the cooking process make automated cooking control inherently difficult to perform.

US 5,945,018 discloses an automatic cooking oven that measures the thermal load, represented by an oven fill, to decide on operation in an automated cooking operation. No user input with regard to the amount of food is needed, as food constitutes a thermal load to the supply of heat.

EP 1384 951 A1 discloses a cooking oven with the features of the preamble of claim 1 and a method of controlling a cooking oven with the features of the preamble of claim 8.

However, in a steam or combination oven, where food is heated by steam or a combination of steam and resistive heating, most of the supply of heat is absorbed by steam, unlike it is the case in a conventional "dry" cooking oven. Thus, the attempt to set an optimum cooking program for a specific amount of food based on the concept of thermal load provides notoriously inaccurate results in a steam or combination oven.

### SUMMARY OF THE INVENTION

Thus, it would be beneficial to have an automatic cooking oven comprising a control system that is particularly adapted to cook food by automatic steam cooking modes.

This aim is reached by the features of the characterising portion of claim 1,

By this arrangement, appropriate cooking parameters can be determined based on the thermal load represented by the amount of the food alone. Even if the thermal load caused by food is small in comparison to the total thermal load, a reliable discrimination level can be ensured, as the thermal load related to food is determined as the difference between total load and steam-induced thermal load.

Combined with stored information as to the properties of different food categories, the oven control system allows automatic control of the cooking operations and automatic determination of a total cooking time and power rates for specific amounts of food without input of a weight-related information. The cooking oven according to the invention drastically improves the results of automatic steam cooking operations, as the accuracy of the decision on cooking parameters is greatly improved.

According to one embodiment of the invention, a cooking phase may be defined by a time period. According a preferred embodiment, a cooking phase is defined by a first threshold temperature and a second threshold temperature. Particularly, the first threshold temperature of the preheating phase may be selected in the range from 60°C to 100°C.

According to one embodiment of the invention, the steam generating system comprises a water supply control for metering a water supply. According to another embodiment of the invention, the steam control system comprises a temperature control system for controlling a steam injection rate. According to a further embodiment of the invention, the steam supply system comprises a water level sensor for controlling a steam injection rate.

The method according to claim 8 is distinguished by the features of the characterising clause.

According to a preferred embodiment of the invention the method comprises a step, wherein the power rate in the preheat phase is selected with respect to the selected cooking mode. The power rate in the preheating rate for a dry cooking mode may be selected as < 80% of the maximum power rate. Otherwise, the power rate in the preheating rate for a steam cooking mode may selected as < 50% of the maximum power rate.

Preferably, the control unit determines a steam supply variable at the beginning of the preheating phase and reduces the power rate of the preheating phase inversely proportional to the steam supply. By selecting a power rate inversely proportional to the steam supply, the increased inaccuracy of measurement at increased steam injection rates can be compensated by providing a larger time or temperature increment. Besides improving accuracy of measurement, a lower power rate aids to provide a linear characteristic of the temperature versus time curve.

According to a preferred embodiment of the invention, the control unit is implemented to select a cooking program comprising an additional initialization cooking phase to prepare the oven cavity for measurements at the beginning and during the preheating phase.

Preferably, the oven heating element is activated to heat the oven cavity to the first threshold temperature of the preheating phase before activating the steam generator.

### BRIEF DESCRIPTION OF THE DRAWINGS

- FIG 1: is a schematic view of an automatic cooking oven according to the present invention showing the oven cavity, steam system and control panel
- FIG 2: is a graph showing temperature vs. time character- istics of the automatic cooking oven according to the present invention for various thermal loads
- FIG 3: is a block diagram that schematically illustrates a control system for an automatic cooking oven ac- cording to the present invention.

### DETAILED DESCRIPTION OF EMBODIMENTS

The cooking oven according to the present invention may be designed as a steam oven for professional or private use. Preferably, it is a conventional household appliance comprising a conventional convection heating system and equipped with an additional steam generating system operable for steam cooking at essentially atmospheric pressure. Such oven is versatile and may be operated in various cooking modes to cook food either by dry heat, by steaming, or by a combination of both, in parallel and/or in succession.

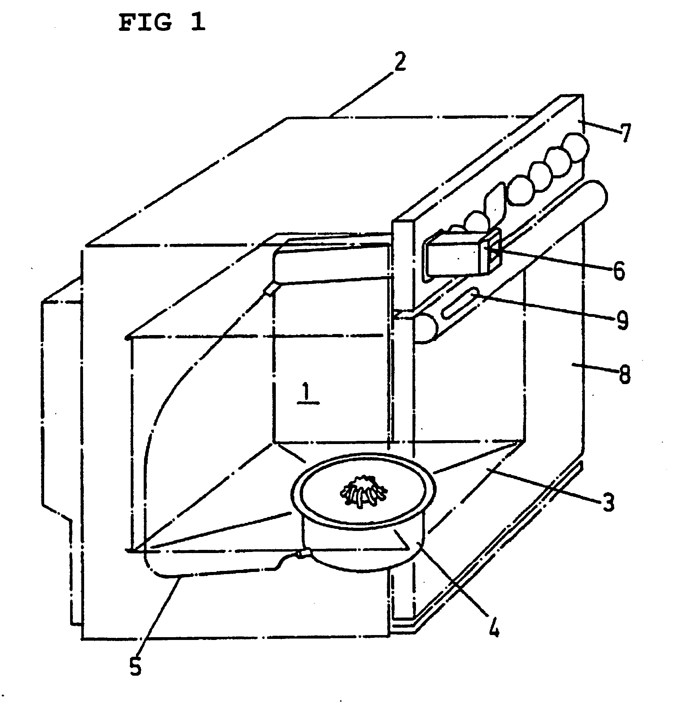

The exemplary combination oven 1 shown in FIG 1 is typical in that the oven 1 comprises a housing 2 enclosing an open-faced cooking cavity 3 having a pair of spaced-apart side walls, joined by a top wall, a bottom wall and a rear wall, and a door 8 for opening and closing the cooking cavity.

While not shown in FIG 1, the combination oven of the invention includes conventional resistive heating elements, as usually mounted above and below the cooking cavity walls in the housing. The oven may comprise a further heating elements in the form of a so-called grill element or an equivalent IR-radiation element, which usually is arranged in the ceiling of the oven cavity. Microwave cooking is also a common method of cooking food. Many modern ovens are equipped with an additional microwave source. Thus, the oven according to the invention may also comprise such an additional source of heat too.

The cooking cavity may further comprise a fan for fan-forced circulation of cooking gases, hot convection air and/or steam, resulting in a more even oven temperature distribution.

Typically, the cooking cavity of a domestic cooking oven is not pressurized, but operates at atmospheric pressure. A vent exhaust 9 is provided to permit steam to escape from the cooking cavity 3, so as to have substantially atmospheric operating conditions within the cooking cavity 3.

The cooking oven according to the invention is equipped with means to provide a plurality of power rate settings of the heating elements. To this aim, the cooking oven may comprise a plurality of controllable heating elements of different wattage adapted for selective energization in response to the selection by means of a control unit. For example, the oven may be provided with a plurality of resistive heating elements and additional grill and microwave element; that may be individually selected by means of a control program.

Otherwise, the supplied power rate may be controlled by pulsing of the heating element, meaning that the power supply is subdivided into power cycles and that the heating element is activated at maximum power level during a optional portion time of the total cycle time, the power level being obtained as the power mean value during the cycle. The durations for the power interval and for the power period are selected to provide a satisfactory range of power rate settings for desired cooking performance.

It will be recalled, that the objective of the present invention is to provide a preprogrammed automatic cooking operation, which is controlled based on estimation of the thermal loads in the oven cavity. Changes in such thermal load are detected based on the thermal response of the oven cavity to a given power rate setting.

To receive thermal response information, the approach used according to the present invention is to monitor the temperature vs. time characteristics of the oven cavity.

To this aim, at least one temperature sensor is provided for sensing the temperature of the oven cavity and feeding this parameter back to the control unit of the oven. Preferably, the temperature sensor is arranged near the vent exhaust of the oven cavity to sense the temperature of the ventilating air as a sensing parameter. Another advantageous embodiment is particular in that several temperature sensors are used, at least one of which is placed, where heat is transported by convection. A further advantageous embodiment is particular in that at least another temperature sensor is shielded from convection. These embodiments all serve to create as relevant a temperature input to the oven control system as possible, as cavity temperature and temperature increments during a given time increment are indicative of the thermal load changes taking place in the oven cavity.

To determine on the temperature vs, time characteristics, the cooking oven also comprises a timer for providing time functions such as setting, adjusting and counting time periods and measuring a time increment for determining the temperature vs time characteristic of the oven cavity in response to a power input. Additionally, the timer may track time during a manual and automated cooking program.

A cooking oven according to the invention comprises a controllable steam generating system configured to inject steam into the oven cavity.

Typically, a steam generating system includes a water container 4 and an electric resistance or induction boiler element positioned in the water container to generate steam by heating water in the water container 4 to which water is supplied through a water supply pipe 4 or from a separate water reservoir.

According to one embodiment of the invention, the steam generator is structured such that a water container is installed within the oven housing outside of the cooking cavity. Steam generated in the water container is introduced into the cooking cavity via a steam supply pipe.

In the embodiment shown in FIG 1 the water supply means include a water reservoir 6 adapted to be fed from the outside. The water reservoir as shown is designed as a partially extractable water-charging drawer 6, disposed above the water container 4. It is in fluid communication with the water container via a water supply pipe 5. In operation, water from the reservoir is gravity-fed to the water container via the water supply pipe 5. Otherwise, a water supply valve and a pump or an impeller may be provided that will allow metering the water flow from said reservoir to the container.

Alternatively, the steam generator may receive water from a water supply line operably connected directly to the mains water supply.

Automatic water-supply means and water supply control means may be provided to eliminate the need to constantly monitor and manually refill the water container.

As various cooking modes are used in an oven according to the invention, which are different in the required quantities of steam, a steam supply control varies the rate of steam generation for continuous, discontinuous or intermittent steam supply in a controlled manner. Such steam supply control may be part of a central oven control system.

To control the steam generating system and particularly the steam injection rate, the steam supply control may be designed to automatically interrupt or limit a current supply to the boiler element. This may be accomplished by varying or interrupting the duty cycle of the boiler element to increase or decrease the amount of steam generated. Otherwise, the injection rate of steam may be governed by a flow rate of water into the water container.

The steam control system of the oven according to the invention is capable of determining an actual value of a variable that relates to the mass of steam injected into the oven cavity and to feed it back to the control unit.

Typically, the variable used is a water volume increment, measured in the steam generator. To this end, various types of feedback parameters, related to the water content and the temperature of the water container, may be used. The steam control system may be arranged to calculate a water volume from e.g. a metered water supply, a counted water valve pulse or the duty cycle of a boiling element.

The water supply control may comprise a water supply valve that is operated in response to an output signal generated by a water level detections means to supply a metered volume of water to the steam generator.

Otherwise, the steam output of the steam generating system and the related water volume may be metered by means of a water level detection element responsive to the change of the water level in the water container.

The water level detector element may be of any type known per se. The sensor can be, for example, as simple a mechanical float switch for cutting of the flow of electricity to the steam generator's heating source or to actuate a water supply.

According to another embodiment, the steam generator may comprise a temperature sensor in contact to the boiler element of the steam generator for metering a steam supply resp. water volume, to the oven cavity. The temperature sensor is positioned to sense when the boiler element begins to overheat. As long as sufficient water is present, the boiler element will not overheat. Overheating of the boiler element will occur, when the water container begins to run dry. Whenever a critical temperature rise or a rise above a predetermined threshold temperature of the boiler element is detected, a water supply is triggered. This detection can be made for example by monitoring the second derivative of the temperature with respect to time and checking if this value exceeds a certain fixed limit. A timer, particularly a digital timer, may be used e.g. for setting a time interval during which water flow to said container is maintained, e.g. when an empty-boil situation has been detected. The steam supply control then converts the water depletion parameters to a water volume resp. to a mass of water increment.

As shown in FIG 1, a control panel 7 is provided on the front of the oven to accommodate a user input section and eventually a display output section, provided with various operating switches and display devices. The control panel communicates with the central oven control system.

User input may cover manual input of the food category information and one of a plurality of desired cooking modes, such as dry heating, steaming or steam cooking by a combination of conventional heating and steaming. Otherwise, the user may select some cooking operation parameters such as final temperature of automated pre-programmed cooking operations for specific food categories, whereby the user is not required to enter a cooking time or a power level or a steam rate, etc.

A display unit, if present, is also positioned on the control panel shown in FIG 1, and may display, controlled by the oven control system, among other things, symbols or plain-text messages for selected programs, i.e. verifies the user's selections made via the user input panel, as well as provides information on how the cooking proceeds.

A clock for separately counting time periods of respective cooking operations may also be provided.

At the end of a cooking operation, it is preferable to provide some type of audible or visual indicator to the user that the established time period has expired. This is typically done by incorporating a piezoelectric buzzer or the like.

Furthermore, the oven according to the invention comprises an oven control system. Said system is arranged to control cooking operations by determining on cooking phases, selecting the oven power rate, the steam injection rate and determining time counts and temperatures.

To this aim, the oven control system comprises a control circuitry and a control unit, the control unit comprising a memory for storing operating data and cooking programs and a data processor for processing actual and stored data.

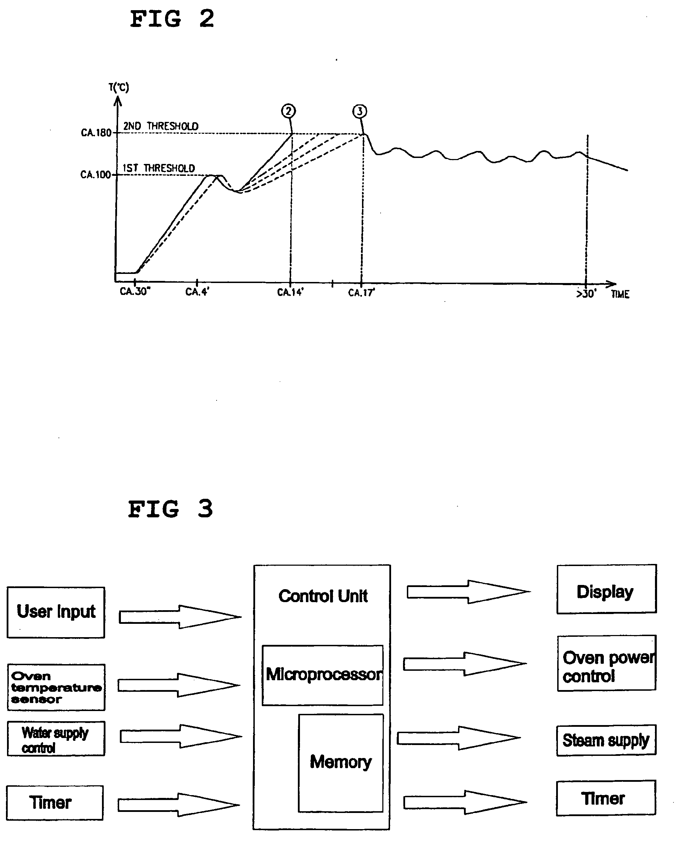

FIG 3 is a block diagram that schematically illustrates a control system for the oven according to the present invention.

The control circuitry is connected at input terminals to receive inputs from the user input controls on the control panel, from the memory, the output of the oven temperature sensor and the electronic timer. Finally, it is connected to the steam system controls, to supply detection signals and the actual values of operation parameters are to the control unit.

The control circuitry further comprises output terminals, which operably communicate with the heating elements, and the steam control system, the timer and eventually to the display control panel.

The memory stores programs, cooking data etc. that are required to control the overall operation of the oven. The memory stores control programs with preselected parameters relating to a desired type of cooking modes, a food category and cooking data, such as cooking temperature and steam and power rates that are required to control the overall operation of the oven.

For example, the cooking data may include tables of data comprising the respective power rates of the heating units and respective final cooking temperatures of cooking operations that are required to cook according to specific programs.

Furthermore, the memory may preferably comprise determining data tables containing data of predetermined thermal load variables of steam and food and data on the temperature vs. time characteristics of the cooking cavity corresponding to respective amounts of steam and foods to be cooked and determining means for collating said data.

The memory also stores actual data, such as default cooking parameters and the manually input cooking parameters.

The control unit includes a data processor, programmed to run a control algorithm that monitors the input signals of available input to make a decision how to perform a cooking operation with regard to number of cooking phases, start, end and operation parameters of each phase and to control operations associated with the water and power supply. Input signal parameters are determined and compared with a set of nominal optimal parameters, and the difference between these is used for establishing control parameters for selectively initiating, interrupting or limiting power supply to the heating means and/or starting or stopping of steam generating.

The control unit may be programmed to implement alternative regulation schemes based on the information transmitted from the detection means, such as a stand-by mode, continuous or intermittent heating mode, continuous or intermittent water supply mode, stop heating during water supply and thereafter reverting to a heating mode.

The control unit selects preprogrammed control program on the basis of supplied user information. The cooking control program covers at least one preheat phase and a final cooking phase. A preprogrammed cooking control program comprising three successive cooking phases, comprising an additional initialization phase, is preferred.

The control unit decides on cooking control parameters for each cooking phase. Each phase is assigned a start parameter, such as an initial temperature or an assigned point in time, and a stop parameter, such as a final temperature determined by the food category or the end of a time period and/or a certain amount of water having evaporated, i. e. the detection of an empty-boil situation following after a certain amount of water was added to the water container.

The control unit instructs the heating system to activate or deactivate the heating elements, either all together, individually, or in groups, and provides instructions regarding the desired temperature of the cavity and the rate at which the heating system heats the cavity. The power levels for the heating element during the pertaining periods may be optimized for each phase and are kept constant during a phase, but may vary from one phase to the other.

The control unit also instructs the steam control system to activate or deactivate the boiler and provides instructions regarding the desired supply of water to the steam system in order to achieve a desired steam injection rate.

The data processor decides particularly on cooking control parameters in the final cooking phase in relation to the amount of food present in the oven cavity, which amount is estimated based on the general concept of thermal load.

The thermal load represented by an amount of food present as an oven fill is determined as the difference between the thermal load represented by a total oven fill of steam and food and a thermal load represented by the amount of steam present as part of the oven fill.

Information on the thermal load represented by an actual steam load in the oven cavity is received from the actual value of a variable related to the mass of injected steam.

The parameter of "thermal load" or "thermal mass", as used here, equals the parameter of heat capacity. A steam related heat capacity depends on the mass of steam according to Cₛₜ∼mₛₜx cₛₜ, wherein Cₛₜ refers to the heat capacity of steam, cₛₜ refers to the specific heat capacity constant of steam and m refers to the mass of steam. As the mass of steam equals the mass of water vaporized, and the volume of water is proportional to the mass of water, a preferred mass-dependent variable is the volume of the amount of water that is injected as steam. As described above such variable is easily detected by common water supply control means.

On the other hand, information on the thermal load or heat capacity represented by a total fill of the oven cavity of steam plus food is received from the heat response of the oven fill to an applied power rate. The heat response of an oven fill to a given power input is measured as the temperature vs. time characteristic of the oven cavity.

The heat response of the total oven fill is given by the following equation C_{fill} = PₑₗΔt / ΔT. C_{fill} is the heat capacity of the oven fill, Pₑₗ is the electrical heating input during the heat up phase, Δt refers to the time increment of the heat-up phase and Δ T to the temperature increment over the heat-up phase. Either time increment Δt or temperature increment ΔT may be measured for an actual value of a heat responsive variable.

The heat response of an oven fill to power is preferably characterized by heating curves comprising an initial phase, a heat-up phase and a steady state final phase.

FIG 2 shows a diagram of a series of typical gradients of temperature T over time t in an oven cavity for various loads. Temperature T is projected on the vertical axis, with a selected first threshold temperature of the oven cavity, where the measurement is started, and a selected target temperature (second threshold temperature), where the measurement is ended.

Projected on the horizontal axis is the measured point of time, where the first threshold temperature is reached and the measured time increment to the point of time where the second threshold temperature is reached.

The temperature gradient in the oven cavity relating to a no fill situation is designated curve 2, while the temperature gradients measured relating to increasing amounts of food and steam are designated curves 3. The temperature curves differ because an added amount of food and steam represents an added thermal load.

Thus, to determine on the heat response of an oven fill, a power rate is selected and then either a measured temperature increment for a preselected time period or a measured time period for a preselected temperature increment may be compared to reference values for said heat response.

In the embodiment shown in FIG 2 a time increment is measured between a first threshold temperature and a second threshold temperature

The delay time increment from e.g. CA 4 to CA 14 is then the result of the added thermal load caused by food and steam being positioned in the oven cavity.

The data processor of the control unit is programmed to determine from the difference between the thermal load of the total oven fill and the thermal load of steam mass a thermal load related to the food load of the oven cavity. The information on the thermal load represented by the amount of food present in the oven cavity is then used to adjust the final cooking program in view of the food load determined.

The oven operates according to a method, which can be characterized as having a preheating phase followed by a final cooking phase. The phases are defined by cooking parameters, such as cooking time, cooking temperature and steam level in the oven cavity. It will be apparent to one of ordinary skill in the oven art that, in reality, the actual cooking temperature and the actual relative humidity fluctuate about a target temperature and a target relative humidity during the operation of an oven.

In a preferred embodiment of the invention, cooking commences with an additional initialization phase, wherein the oven temperature is raised to a first threshold temperature, followed by the preheating phase and the final cooking phase.

Operation starts with the user input. Not more than two measures are required by the user, namely: input of a relevant food data set and start of the oven. This facilitates handling of the cooking oven.

The oven may be started automatically by a timer or by operating a starter button.

The control system starts operation by initializing control data and determines in the affirmative step, how the food data set corresponds to a control data sets previously stored in the memory.

The control system then selects an appropriate control program on the basis of the control data determined by the food category and cooking modes (dry heat, dry heat plus steam, steam only) and monitors the cooking procedure fully automatically. The user need not, as is the case in conventional ovens, select any power settings and cooking times.

The control unit establishes start and end for the cooking phases according to an automatic program or according to pre-established data tables, which forms part of the memory content.

If the cooking mode relates to dry cooking, only an initial oven power rate is selected. If the cooking mode relates to a mode, which will comprise operation of the steam generator, an initial steam injection rate is selected too.

Preferably, during a start period after switching on of the control unit, an initial cavity temperature, typically corresponding to the ambient temperature is measured. An initial output of the timer is also obtained and this information is stored for compensation purposes.

The initialization phase essentially prepares the oven cavity for the thermal load calculation step. Because a properly prepared oven cavity leads to more consistent data, the environment in the cavity is set to the desired conditions, i.e., uniformly hot and steamed, for the second cooking period prior to retrieving thermal load data.

The control circuit selects the power level applied by the heating element, and controls the length of time for which the source is switched on. In an initialization phase, the heating element is typically energized at a high power level to reduce the response time required for the oven temperature to rise to the threshold temperature associated with the preheat phase. For example, a fast heating rate can correspond to operating the heating system at substantially maximum capacity.

Yet, in order to avoid over-shooting the threshold temperature, it is not desirable to initiate the fast-heat operating mode, when the cavity temperature is already at a temperature higher than a certain predetermined fast-heat threshold temperature.

Thus, before initiating the fast-heat mode, a check may be made on the initial cavity temperature to determine it exceeds a predetermined reference value. If not, the fast-heat mode is initiated and power control means proceeds to operate the heating element in the fast-heat mode. If the temperature exceeds a reference value, the fast-heat mode is not initiated.

The initialization phase starts when the controller operates the heating system to heat the oven cavity to a first threshold temperature.

The steam system may begin immediately to introduce steam into the oven cavity during the first cooking steps. Then the water container is immediately filled with water. The flow rate of the water may be controlled by the water supply control, to supply a metered water volume. In addition, the boiler element starts immediately at a high heating rate, so that the water is boiled as quickly as possible and steam can be injected into the cavity at the beginning of the first cooking phase.

Introducing steam into the cavity as soon as possible during the first cooking step ensures that the food is not exposed to dry, high temperature environment, which can cause the food to dry out. Thus, the benefits of cooking with steam can be fully realized when the steam is introduced fairly quickly.

Otherwise steam injection into the oven cavity may be retarded until the oven cavity reaches a first threshold temperature and steam is injected to fill the oven cavity before the start of a second cooking phase. Waiting until the oven temperature reaches at least the first threshold temperature to introduce the steam into the cavity ensures that the temperature of the cavity is high enough to sustain steam in a vaporized state. As a result, the vapor will not condense in the cavity.

Based on the same considerations, the first threshold temperature for a steam cooking mode is preferably selected in the range from 80°C to 100°C, next to, resp. above, the local boiling point of water, where the specific evaporation heat of water absorbs quite a lot of heat without a temperature rise.

According to the preferred embodiment, the initialization phase terminates when the oven cavity reaches a first predetermined threshold temperature. Alternatively, the initialization phase ends after a preselected time period or after a certain amount of water has evaporated, i.e. when an empty-boil situation has been detected.

During the initialization phase, the cavity reaches a condition, where it is uniformly hot and uniformly steamed. The term "uniformly heated" refers to all spaces in the cavity, the walls of the cavity, steam and food items, in the cavity achieving the first threshold temperature. "Uniformly steamed" refers to a condition where the relative humidity of the cavity is at a level desired for second cooking phase. Preferably, the relative humidity reaches a maximum relative humidity during or by the end of the initialization phase.

An end time point of the initialization phase a thermal load represented by steam is determined. The determination is based on the control data supplied by the steam generating system. Particularly, estimating the thermal load based on the metered volume of water added to the steam generator is an accurate method to determine an actual value of a steam mass related variable.

The actual value of the mass related variable obtained after the initiation phase is compared with an empirical reference value previously stored in the memory so that a determination is made as to relate to the steam load in the oven fill. Since differences in water volume are easily detected, the discrimination between them can be reliably made. The actual value of the mass-related variable is stored in the memory and retained until the preheat cooking phase is terminated.

When the initialization phase is completed upon the cavity reaching a predetermined first threshold temperature, the preheating phase begins.

According to one possible embodiment of the invention, the preheating phase continues until the time control has determined that the end of a preselected time period is reached; thus, the temperature raise of the preheating phase is variable.

According to an alternative preferred embodiment of the invention, the preheating phase continues until the oven controls has determined that a second threshold temperature is reached; thus, the duration of phase 2 is variable. Preferably, said second threshold temperature of the preheating cooking phase is less than a final cooking temperature.

Then, during the preheating phase, the heating system heats up the cavity to the second threshold temperature and the steam system maintains the desired or predetermined relative humidity. Because the amount of steam injected by the steam system may decrease while steam in the cavity is lost through vents, the relative humidity of the cavity may gradually decrease. Therefore, the steam system may continue to inject enough steam to replace steam lost through vents or other means and maintain the desired relative humidity for the preheating cooking phase.

Preferably, the power rate of the preheating phase is optimized in relation to the thermal load, representing the injected amount of steam and determined at the beginning of the preheating phase. Prior to the preheating period, before the oven cavity reaches the first threshold temperature, maximum power had been injected into the oven cavity to accelerate the initial heating. In the preheating phase, the power rate is preferably reduced.

Preferably, the power level is adapted in general to the cooking mode. While slightly reduced power rates of not less than 80 % of the maximum rate may be selected for dry cooking, particularly low heating rates are selected for steam cooking modes. According to one embodiment, power rates for steam cooking modes are reduced to be less than 50% of the maximum output.

In a preferred embodiment, the power rates for steam cooking modes are adapted with regard to the initial thermal steam load resp. the steam injection rate, and are inversely proportional related to such rates. In other words, where the amount of steam is large, the power supply is reduced accordingly, where the amount of steam is small, the power supply is maintained at a higher level. A lower power rate will provide a larger time or temperature increment for improved accuracy of estimation. The linearity of the temperature vs. time characteristic is also improved in these embodiments.

In greater detail, the process of adapting the power rate in the preheating phase may simply be performed by using the actual value of variable related to the injected mass of steam as address input to corresponding data tables in the memory, containing previously empirically derived data, and comparing the resulting outputs together to the power rate of the preheating phase. The contents of the data tables are readily determined by the skilled person by repetitive experiments on different food categories and cooking modes.

Alternatively, the processor may be arranged to calculate the power rate from these values, using a predetermined algorithm for relating the mass related variable to power rates, which may be reasonably well be brought into relation by mathematical expressions and predetermined constant scaling factors for a selected food category and cooking mode.

To further improve the accuracy of the estimation of the heat capacity of food present it may be appropriate to select the second threshold temperature as high as possible, while taking the food-category into consideration.

Thereafter the preheating operation corresponding to such control data set at the beginning of the preheating phase is performed.

The control unit starts to drive a heating element at the selected power rate and sets the timer, starting the timing counting operation for the preheating cooking phase.

Throughout the preheat cooking phase, the heating elements are energized to raise the oven cavity to the desired temperature set point, the second threshold temperature.

According to the preferred embodiment, the processor executes a routine to read the output of the temperature sensor at frequent intervals during the preheating phase. If the output of the sensor indicates that the oven temperature is above a predetermined threshold level, the preheat phase is terminated.

At the end of the preheating phase, an actual value of a variable related to the thermal load represented by the total oven fill of steam and food is determined. Subsequently the thermal load represented by food alone is determined as the difference between the thermal load represented by the total oven fill and the thermal load represented by the injected steam determined at the beginning of the preheating phase.

As described above, to determine on the thermal of a total oven fill in a preheating phase, a power rate for the preheating phase is selected and then either a temperature increment for a preselected time period or a time period for a preselected temperature increment is measured. In both cases, the measured value of time resp. temperature value is dependent of the amount of the food plus steam in the oven cavity.

In the embodiment shown in FIG 2 a time increment is measured between a first threshold temperature and a second threshold temperature. Accordingly, when a temperature increment ΔT is obtained in the heating cavity 3 by exceeding the second threshold temperature, a time count is retrieved from the timer. Based on the retrieved time count, a time increment Δt is determined. Referring to FIG 2, the delay time increment from e.g. CA 4 to CA 14 is then the actual value of a time variable corresponding to the thermal load of the total oven fill.

Next, it is decided how the time increment ΔT compares a reference value for an oven fill previously stored in the control memory for determining on the thermal load of the corresponding amount of steam plus food.

In the next step, determining the thermal load, due to an amount of food, as the difference of the thermal load of the oven fill and the thermal load of the steam injected, basically implies subtracting the heat capacity of steam from the total heat capacity of the oven fill. In practice, the process may simply be performed by using the time count readings of the steam control system and the stored steam mass-related data together with data on time increments as address inputs to corresponding data tables containing previously empirically derived data and using the resulting collated outputs to decide finally on the cooking parameters for the final cooking phase.

By this measurement, even when the change of the temperature vs. time characteristic, caused by the food in itself, is small in comparison to the total load, that small value can be reliably determined as the difference between the total load and the steam load. As a result, the final cooking operation is performed, based on precise data related to the amount of food present in the oven cavity.

Thereafter, the cooking parameters for a final cooking phase are determined based on said thermal load variable related to the amount of food fill only.

According to one embodiment of the invention, the final temperature in a final cooking phase is a cooking temperature, which can be entered manually by the user or is set by the control unit according to an automatic cooking program. The cooking temperature is set, at least in part, based on the desired doneness of the amount of food present.

Once the final cooking temperature is reached, the heating element maintains the temperature of the cavity at the final cooking temperature for the rest of the cooking operation and the steam system maintains the desired or maximum relative humidity in the cavity for a predetermined period of time.

The control unit may decide on power and steam rate in the final cooking phase on basis of the computed amount of food or on basis of the measured oven fill, while the final cooking time is solely determined by the amount of food present.

The final cooking time typically forms an essential part of the total cooking operation time, although it can be understood that some cooking occurs during the preheating phase. Thus, according to one embodiment of the invention, the duration of the final cooking phase may be determined as equal to a fraction or percentage (%) of the overall cooking period.

After the temperature of the cavity reaches the final cooking temperature or after a predetermined period of time, the heating system continues to heat the oven cavity to final temperature at selected power and steam rates.

Upon lapse of the set final cooking time, the control unit de-energizes the heating element and the boiler thereby completing the cooking operation. At the same time, the control unit may operate to display on the display section an indication indicative of completion of the heating and activate a buzzer so that the user is informed of completion of the heating.

It is possible to vary or otherwise alter certain aspects of the cooking oven and the method described without departing from the scope of the invention. For example, the preheating step can comprise multiple power rates rather than a single rate, whereby the temperature of the cavity is raised to a first preheat temperature at a first preheating rate and thereafter raised to a second preheat temperature at a second preheating rate different than the first preheating rate and filled with steam.

Furthermore, the final cooking step has been described above as maintaining the temperature of the cavity at a constant temperature. However, it is within the scope of the invention to vary the final cooking temperature and, therefore, the temperature of the cavity during this cooking step. Thus, the term "maintain" is intended to include keeping the temperature of the cavity substantially constant and varying the temperature of the cavity according to the second or more cooking temperatures.

Other improvements, modifications and embodiments will become apparent to one of ordinary skill in the art upon review of this disclosure. Such improvements, modifications and embodiments are considered to be within the scope of this invention as defined by the following claims.

### LIST OF NUMERALS

- 1: Cooking oven
- 2: oven housing
- 3: oven cavity
- 4: water container
- 5: water supply pipe
- 6: water reservoir
- 7: control panel
- 8: oven door
- 9: exhaust

## Claims

1. Cooking oven comprising an oven cavity (3) for accommodating an oven fill of steam and food, at least one oven heating element operable at a plurality of power rates, an oven temperature sensor for sensing an oven cavity temperature, a steam generating system comprising a steam generator operable at a plurality of steam injection rates and a steam supply control operable to determine a variable related to the steam mass injected into the oven cavity (3), a timer operable to perform time functions, a user input panel and an oven control system comprising a control unit comprising a memory for storing cooking programs and empirical data of a plurality of preprogrammed cooking operations, and a data processor,
programmed to implement the following functions:
selecting a cooking program, divided into cooking phases, comprising at least one preheating phase and
one final cooking phase, **characterised by** determining in said preheating phase a thermal load variable related to the injected steam mass,
determining a thermal load variable related to the total oven fill of steam and food based on the temperature vs. time characteristic of the oven cavity (2) in said preheating phase,
determining a thermal load variable related to the amount of food in the oven fill by deducing the thermal load variable of steam from the thermal load variable of the total oven fill,
and determining cooking parameters for the final cooking phase based on said thermal load variable related to the amount of food.

2. Cooking oven according to claim 1,
wherein a cooking phase is defined by a time period.

3. Cooking oven according to claim 1,
wherein a cooking phase is defined by a first threshold temperature and a second threshold temperature and/or wherein a cooking phase is defined by a certain amount of water that has to be evaporated.

4. Cooking oven according to claim 3,
wherein the first threshold temperature of the preheating phase is in the range from 80°C to 100°C.

5. Cooking oven according to claim 1 to 4,
wherein the steam generating system comprises a water supply control for metering a water supply.

6. Cooking oven according to claim 1 to 4,
wherein the steam control system comprises a temperature control system for controlling a steam injection rate.

7. Cooking oven according to claim 1 to 4,
wherein the steam generating system comprises a water level sensor for controlling a steam injection rate and/or comprising a sensor to detect an empty-boil situation in the steam generator.

8. A method of controlling a cooking oven,
said cooking oven (1) comprising an oven cavity (2) for accommodating an oven fill of steam and food, at least one oven heating element operable at a plurality of power rates, an oven temperature sensor for sensing an oven cavity temperature, a steam generating system comprising a steam generator operable at a plurality of steam injection rates and a steam supply control operable to determine a variable related to the steam mass injected into the oven cavity (2), a timer operable to perform time functions, a user input panel, an oven control system for controlling the heating element as well as the steam generating system comprising a memory comprising stored cooking programs and stored empirical data of a plurality of preprogrammed cooking operations and a data processor,
the method comprising the steps of
selecting, on the basis of the user input a cooking program, divided into cooking phases, comprising at least one preheating phase and one final cooking phase,
deciding on start and end for a first cooking period in accordance with the selected cooking program, activating the oven heating element at a power level in accordance with the selected cooking program, activating the steam control system and the heating element of the steam generator at a steam injection level in accordance with the selected cooking program, determining in said preheating phase a thermal load variable related to the oven steam fill based on the variable related to the injected steam mass, **characterised by** determining in said preheating phase a thermal load variable related to a total oven fill of steam and food based on the temperature vs. time characteristic of the oven cavity (2) in said preheat phase,
determining the thermal load variable related to the amount of food in the oven fill by deducing the thermal load variable of steam from the thermal load variable of the total oven fill,
and determining cooking parameters for a final cooking phase based on said thermal load variable related to the amount of food.

9. A method according to claim 8,
wherein the power rate in the preheat phase is selected with respect to the selected cooking mode.

10. A method according to claim 9,
wherein the power rate in the preheating rate is selected as < 80% of the maximum power rate for a dry cooking mode.

11. A method according to claim 9,
wherein the power rate in the preheating rate is selected as < 50% of the maximum power rate for a steam cooking mode.

12. A method according to claim 8 to 11,
wherein the control unit determines a steam supply variable at the beginning of the preheating phase and reduces the power rate of the preheating phase inversely proportional to the steam supply.

13. A method according to the method according to claim 8 to 12,
wherein the cooking periods comprise an additional initialization phase.

14. A method according to the method according to claim 8 to 13,
wherein a sensor detects an empty-boil situation in the steam generator.

15. The method according to claim 8 to 14,
wherein the oven heating element is activated to heat the oven cavity (2) to the first threshold temperature of the preheating phase before activating the steam generator.

## Patentansprüche

1. Küchenherd mit einem Ofenhohlraum (3) zur Aufnahme einer Ofenfüllung an Dampf und Nahrungsmitteln, wobei mindestens ein Ofenheizelement auf einer Mehrzahl von Stromleistungsstufen zu betreiben ist, ferner mit einem Ofentemperaturfühler zum Messen einer Ofenhohlraumtemperatur, einem Dampferzeugungssystem, das einen bei einer Mehrzahl von Dampfzuführungsraten zu betreibenden Dampfgenerator und eine Dampfversorgungssteuerung umfasst, die dazu verwendet wird, eine auf die in den Ofenhohlraum (3) eingeführte Dampfmasse bezogene Variable zu bestimmen, ferner mit einem Zeitgeber, der Zeitfunktionen ausführt, einem Benutzereingabefeld und einem Ofensteuerungssystem, das eine Steuerungseinheit mit einem Speicher zum Speichern von Kochprogrammen und empirischen Daten einer Mehrzahl von vorprogrammierten Kochvorgängen umfasst, und mit einem Datenprozessor, der zur Ausführung der folgenden Funktionen programmiert ist:
Auswählen eines Kochprogramms, das in Kochphasen unterteilt ist, die mindestens eine Vorheizphase und eine Abschlusskochphase umfassen, **gekennzeichnet durch**
die Bestimmung einer thermischen Lastvariablen mit Bezug auf die zugeführte Dampfmasse in der Vorheizphase,
die Bestimmung einer thermischen Lastvariablen mit Bezug auf die gesamte Ofenfüllung mit Dampf und Nahrungsmitteln auf Basis der Temperatur im Vergleich zur Zeitcharakteristik des Ofenhohlraums (2) in der Vorheizphase,
die Bestimmung einer thermischen Lastvariablen mit Bezug auf die Menge der Nahrungsmittel in der Ofenfüllung **durch** Ableitung der thermischen Lastvariablen des Dampfes von der thermischen Lastvariablen der gesamten Ofenfüllung,
und die Bestimmung der Kochparameter für die Abschlusskochphase auf Basis der thermischen Lastvariablen mit Bezug auf die Menge an Nahrungsmitteln.

2. Küchenherd gemäß Anspruch 1,
wobei eine Kochphase durch eine Zeitperiode festgelegt wird.

3. Küchenherd gemäß Anspruch 1,
wobei eine Kochphase durch eine erste Grenzwerttemperatur und eine zweite Grenzwerttemperatur bestimmt wird und/oder wobei eine Kochphase durch eine bestimmte Menge an Wasser, das verdampft werden muss, bestimmt wird.

4. Küchenherd gemäß Anspruch 3,
wobei die erste Grenzwerttemperatur der Vorheizphase im Bereich zwischen 80°C und 100°C liegt.

5. Küchenherd gemäß Anspruch 1 bis 4,
wobei das Dampferzeugungssystem eine Wasserversorgungssteuerung zum Messen einer Wasserversorgung umfasst.

6. Küchenherd gemäß Anspruch 1 bis 4,
wobei das Dampfsteuerungssystem ein Temperaturregelsystem zum Steuern einer Dampfzuführungsrate umfasst.

7. Küchenherd gemäß Anspruch 1 bis 4,
wobei das Dampferzeugungssystem einen Wasserstandsensor zur Steuerung einer Dampfzuführungsrate und/oder einen Sensor zur Feststellung einer Leerstandssituation im Dampfgenerator umfasst.

8. Verfahren zur Steuerung eines Küchenherds,
wobei der Küchenherd (1) einen Ofenhohlraum (2) zur Aufnahme einer Ofenfüllung an Dampf und Nahrungsmitteln umfasst, ferner mindestens ein Ofenheizelement, das auf einer Mehrzahl von Stromleistungsstufen zu betreiben ist, einen Ofentemperaturfühler zum Messen einer Ofenhohlraumtemperatur, ein Dampferzeugungssystem, das einen bei einer Mehrzahl von Dampfzuführungsraten zu betreibenden Dampfgenerator und eine Dampfversorgungssteuerung umfasst, die dazu verwendet wird, eine auf die in den Ofenhohlraum (2) eingeführte Dampfmasse bezogene Variable zu bestimmen, ferner einen Zeitgeber, der Zeitfunktionen ausführt, ein Benutzereingabefeld, ein Ofensteuerungssystem zum Steuern des Heizelements und des Dampferzeugungssystems, das einen Speicher umfasst, der gespeicherte Kochprogramme und gespeicherte empirischen Daten einer Mehrzahl von vorprogrammierten Kochvorgängen umfasst, und einen Datenprozessor,
wobei das Verfahren folgende Schritte umfasst:
auf Basis der Benutzereingaben das Auswählen eines Kochprogramms, das in Kochphasen unterteilt ist, die mindestens eine Vorheizphase und eine Abschlusskochphase umfassen,
Entscheiden über Anfang und Ende einer ersten Kochperiode in Entsprechung zu dem ausgewählten Kochprogramm,
Aktivieren des Ofenheizelements auf einer Leistungsstufe in Entsprechung zu dem gewählten Kochprogramm,
Aktivieren des Dampfsteuerungssystems und des Heizelements des Dampfgenerators auf einer Dampfzuführungsstufe in Entsprechung zu dem gewählten Kochprogramm,
Bestimmung einer thermischen Lastvariablen mit Bezug auf die Ofendampffüllung auf Basis der Variablen mit Bezug auf die zugeführte Dampfmasse in der Vorheizphase, **gekennzeichnet durch**
die Bestimmung einer thermischen Lastvariablen in der Vorheizphase mit Bezug auf eine gesamte Ofenfüllung mit Dampf und Nahrungsmitteln auf Basis der Temperatur im Vergleich zur Zeitcharakteristik des Ofenhohlraums (2) in der Vorheizphase,
die Bestimmung der thermischen Lastvariablen mit Bezug auf die Menge der Nahrungsmittel in der Ofenfüllung **durch** Ableitung der thermischen Lastvariablen des Dampfes von der thermischen Lastvariablen der gesamten Ofenfüllung,
und die Bestimmung der Kochparameter für eine Abschlusskochphase auf Basis der thermischen Lastvariablen mit Bezug auf die Menge an Nahrungsmitteln.

9. Verfahren gemäß Anspruch 8,
wobei die Leistungsstufe in der Vorheizphase mit Bezug auf den gewählten Kochmodus ausgewählt wird.

10. Verfahren gemäß Anspruch 9,
wobei die Leistungsstufe in der Vorheizphase als <80% der Maximalleistungsstufe für einen Trockenkochmodus gewählt wird.

11. Verfahren gemäß Anspruch 9,
wobei die Leistungsstufe in der Vorheizphase als <50% der Maximalleistungsstufe für einen Dampfkochmodus gewählt wird.

12. Verfahren gemäß Anspruch 8 bis 11,
wobei die Steuerungseinheit zum Beginn der Vorheizphase eine Dampfversorgungsvariable bestimmt und die Leistungsstufe der Vorheizphase umgekehrt proportional zur Dampfversorgung reduziert.

13. Verfahren gemäß dem Verfahren von Anspruch 8 bis 12,
wobei die Kochperioden eine zusätzliche Initialisierungsphase umfassen.

14. Verfahren gemäß dem Verfahren von Anspruch 8 bis 13,
wobei ein Sensor eine Leerstandssituation im Dampfgenerator feststellt.

15. Verfahren gemäß Anspruch 8 bis 14,
wobei das Ofenheizelement aktiviert wird, um den Ofenhohlraum (2) vor der Aktivierung des Dampfgenerators auf die erste Grenzwerttemperatur der Vorheizphase zu erhitzen.

## Revendications

1. Four de cuisson comprenant une cavité de four (3) pour recevoir un contenu de four en vapeur et nourriture,
au moins un élément chauffant de four pouvant être utilisé à une pluralité de niveaux de puissance, un capteur de température de four pour détecter une température de cavité de four, un système de génération de vapeur comprenant un générateur de vapeur pouvant être utilisé à une pluralité de niveaux d'injection de vapeur et une commande d'alimentation en vapeur pouvant être utilisée pour déterminer une variable relative à la masse de vapeur injectée dans la cavité de four (3), une minuterie pouvant être utilisée pour exécuter des fonctions de minuterie, un panneau d'entrée d'utilisateur, et
un système de commande de four comprenant une unité de commande comprenant une mémoire pour mémoriser des programmes de cuisson et des données empiriques d'une pluralité d'opérations de cuisson préprogrammées, et un processeur de données,
programmé pour effectuer les fonctions suivantes :
sélectionner un programme de cuisson, divisé en phases de cuisson, comprenant au moins une phase de préchauffage et une phase de cuisson finale, **caractérisé par** les étapes consistant à
déterminer, dans ladite phase de préchauffage, une variable de charge thermique relative à la masse de vapeur injectée,
déterminer une variable de charge thermique relative au contenu de four total en vapeur et nourriture sur la base de la caractéristique de température en fonction du temps de la cavité de four (2) dans ladite phase de préchauffage,
déterminer une variable de charge thermique relative à la quantité de nourriture dans le contenu de four en déduisant la variable de charge thermique de vapeur de la variable de charge thermique du contenu de four total,
et déterminer les paramètres de cuisson pour la phase de cuisson finale sur la base de ladite variable de charge thermique relative à la quantité de nourriture.

2. Four de cuisson selon la revendication 1,
dans lequel une phase de cuisson est définie par une période de temps.

3. Four de cuisson selon la revendication 1,
dans lequel une phase de cuisson est définie par une première température de seuil et une deuxième température de seuil et/ou dans lequel une phase de cuisson est définie par une certaine quantité d'eau qui doit être évaporée.

4. Four de cuisson selon la revendication 3,
dans lequel la première température de seuil de la phase de préchauffage est dans la plage de 80 °C à 100 °C.

5. Four de cuisson selon les revendications 1 à 4, dans lequel le système de génération de vapeur comprend une commande d'alimentation en eau pour doser une alimentation en eau.

6. Four de cuisson selon les revendications 1 à 4, dans lequel un système de commande de vapeur comprend un système de commande de température pour commander un niveau d'injection de vapeur.

7. Four de cuisson selon les revendications 1 à 4, dans lequel le système de génération de vapeur comprend un capteur de niveau d'eau pour commander un niveau d'injection de vapeur et/ou comprenant un capteur pour détecter une situation d'évaporateur vide dans le générateur de vapeur.

8. Procédé de commande d'un four de cuisson,
ledit four de cuisson (1) comprenant une cavité de four (2) pour recevoir un contenu de four en vapeur et en nourriture, au moins un élément chauffant de four pouvant être utilisé à une pluralité de niveaux de puissance, un capteur de température de four pour détecter une température de cavité de four, un système de génération de vapeur comprenant un générateur de vapeur pouvant être utilisé à une pluralité de niveaux d'injection de vapeur et une commande d'alimentation en vapeur pouvant être utilisée pour déterminer une variable relative à la masse de vapeur injectée dans la cavité de four (2), une minuterie pouvant être utilisée pour effectuer des fonctions de minuterie, un panneau d'entrée d'utilisateur, un système de commande de four pour commander l'élément chauffant ainsi que le système de génération de vapeur comprenant une mémoire comprenant des programmes de cuisson mémorisés et des données empiriques mémorisées d'une pluralité d'opérations de cuisson préprogrammées et un processeur de données,
le procédé comprenant les étapes consistant à
sélectionner, sur la base de l'entrée d'utilisateur, un programme de cuisson, divisé en phases de cuisson, comprenant au moins une phase de préchauffage et une phase de cuisson finale,
décider d'un début et d'une fin d'une première période de cuisson selon le programme de cuisson sélectionné,
activer l'élément chauffant de four à un niveau de puissance selon le programme de cuisson sélectionné,
activer le système de commande de vapeur et l'élément chauffant du générateur de vapeur à un niveau d'injection de vapeur selon le programme de cuisson sélectionné,
déterminer, dans ladite phase de préchauffage, une variable de charge thermique relative au contenu en vapeur du four sur la base de la variable relative à la masse de vapeur injectée, **caractérisé par** les étapes consistant à
déterminer, dans ladite phase de préchauffage, une variable de charge thermique relative à un contenu de four total en vapeur et nourriture sur la base de la
caractéristique de température en fonction du temps de la cavité de four (2) dans ladite phase de préchauffage,
déterminer la variable de charge thermique relative à la quantité de nourriture dans le contenu de four en déduisant la variable de charge thermique de vapeur de la variable de charge thermique du contenu de four total,
et déterminer les paramètres de cuisson pour une phase de cuisson finale sur la base de ladite variable de charge thermique relative à la quantité de nourriture.

9. Procédé selon la revendication 8,
dans lequel le niveau de puissance dans la phase de préchauffage est sélectionné par rapport au mode de cuisson sélectionné.

10. Procédé selon la revendication 9,
dans lequel le niveau de puissance dans la phase de préchauffage est sélectionné pour être inférieur à 80 % du niveau de puissance maximum pour un mode de cuisson à sec.

11. Procédé selon la revendication 9,
dans lequel le niveau de puissance dans la phase de préchauffage est sélectionné pour être inférieur à 50 % du niveau de puissance maximum pour un mode de cuisson à la vapeur.

12. Procédé selon les revendications 8 à 11,
dans lequel l'unité de commande détermine une variable d'alimentation en vapeur au début de la phase de préchauffage et réduit le niveau de puissance de la phase de préchauffage de manière inversement proportionnelle à l'alimentation en vapeur.

13. Procédé selon les revendications 8 à 12,
dans lequel les périodes de cuisson comprennent une phase d'initialisation supplémentaire.

14. Procédé selon les revendications 8 à 13,
dans lequel un capteur détecte une situation d'évaporateur vide dans le générateur de vapeur.

15. Procédé selon les revendications 8 à 14,
dans lequel l'élément chauffant de four est activé pour chauffer la cavité de four (2) à la première température de seuil de la phase de préchauffage avant d'activer le générateur de vapeur.
